# EUROPÄISCHE PATENTSCHRIFT

(11) **EP 1 499 821 B1**
(45) Veröffentlichungstag und Bekanntmachung des Hinweises auf die Patenterteilung: **28.09.2005**
(21) Anmeldenummer: 03746231.4
(22) Anmeldetag: 10.04.2003
(51) Int. Cl.: F16H 61/32

(54) **ANORDNUNG ZUR ÜBERTRAGUNG DER SCHALT- UND WÄHLBEWEGUNGEN ZU EINEM SCHALTFINGER**
ARRANGEMENT FOR THE TRANSMISSION OF THE SHIFT AND SELECTION MOVEMENTS TO A SELECTION FINGER
DISPOSITIF DE TRANSFERT DES MOUVEMENTS DE COMMUTATION ET DE SELECTION VERS UN DOIGT DE SELECTION

(30) Priorität: 10.04.2002 DE 10215715; 05.09.2002 DE 10241068
(43) Veröffentlichungstag der Anmeldung: 26.01.2005
(73) Patentinhaber: LuK Lamellen und Kupplungsbau Beteiligungs KG, 77815 Bühl (DE)
(72) Erfinder: BENNDORF, Jens, 75417 Mühlacker (DE); ESLY, Norbert, 77815 Bühl (DE)
(86) Internationale Anmeldenummer: PCT/DE2003/001185
(87) Internationale Veröffentlichungsnummer: WO 2003/087633

(56) Entgegenhaltungen:
- EP-A- 1 001 193

## Beschreibung

Die vorliegende Erfindung betrifft eine Anordnung zur Übertragung der Schalt- und Wählbewegungen von Getriebemotoren zu einem Schaltfinger.

Die EP-A-1001193 zeigt ein Anordnung zur Übertragung der Schalt- und Wählbewegungen von Getriebemotoren zu einem Schaltfinger, wobei ein Segmentteil vorgesehen ist, das um eine Achse drehbar ist, die gelagert ist, wobei das Segmentteil zu seiner Drehung eine durch ein Ritzel eines Schaltmotors angetriebene Verzahnung aufweist, die die Drehung des Segmentteiles auf den Schaltfinger überträgt, der um eine Schaltfingerachse drehbar ist, und wobei der Schaltfinger durch einen Wählmotor verschiebbar ist.

Bei der Übertragung der Schalt- und Wählbewegungen von den Getriebemotoren zu einem Schaltfinger einer Getriebeaktorik besteht ein Problem darin, die Unabhängigkeit zwischen der Schaltbewegung und der Wählbewegung herzustellen. Bei den meisten bekannten Getriebeanordnungen werden beide Bewegungen durch eine zentrale Schaltwelle zusammengeführt, an der der Schaltfinger angeordnet ist.

Die Aufgabe der vorliegenden Erfindung besteht darin, eine Anordnung zu schaffen, mit deren Hilfe die Schaltbewegung eines Schaltmotors und die Wählbewegung eines Wählmotors unabhängig voneinander zum Schaltfinger übertragen werden können.

Diese Aufgabe wird durch eine Anordnung zur Übertragung der Schalt- und Wählbewegungen von Getriebemotoren zu einem Schaltfinger gelöst, bei der ein Segmentteil vorgesehen ist, das um eine Achse drehbar ist, die in einem Lagerschlittenteil gelagert ist, wobei das Segmentteil zu seiner Drehung auf seiner einen Seite eine erste, durch das Ritzel eines Schaltmotors angetriebene Verzahnung und auf seiner anderen Seite eine zweite Verzahnung aufweist. Diese zweite Verzahnung überträgt die Drehung des Segmentteiles auf den Schaltfinger, der im Lagerschlittenteil um eine Schaltfingerachse drehbar ist. Das Lagerschlittenteil ist durch einen Wählmotor in der Richtung der Achse des Ritzels und in der dazu parallelen Richtung der Schaltfingerachse verschiebbar.

Der wesentliche Vorteil der Erfindung besteht darin, dass eine vollständigen Entkopplung zwischen der Schaltbewegung und der Wählbewegung besteht. Es besteht ferner vorteilhafter Weise eine Unabhängigkeit zwischen der axialen Lagerung des Ritzels des Schaltmotors zum Abtrieb (Kronenradsegmentteil) desselben. Dies bedeutet, dass ein toleranzunempfindliches Maß zwischen der Anschraubfläche des Schaltmotors und der restlichen Anordnung gegeben ist. Es sind keine speziellen Verzahnungsmaschinen notwendig. Es können vorteilhafter Weise die gleichen Maschinen wie für Stimräder verwendet werden. Vorteilhafterweise ergibt sich bei der vorliegenden Anordnung ein Gewinn an Freiheitsgraden bei der Anordnung der Getriebemotoren und zudem ergibt sich ein Raumgewinn innerhalb und außerhalb des Gehäuses der vorliegenden Anordnung. Eine geeignete Kombination der beiden theoretisch voneinander unabhängigen Kronenverzahnungen ermöglicht ein variables Erreichen der gewünschten Gesamtübersetzung.

Bei einer bevorzugten Ausgestaltung der erfindungsgemäßen Anordnung zur Übertragung der Schalt- und Wählbewegungen von Getriebemotoren zu einem Schaltfinger sind die erste Verzahnung und die zweite Verzahnung Kronenverzahnungen. Besonders bevorzugt sind die erste Kronenverzahnung und die zweite Kronenverzahnung am Segmentteil sich gegenüberliegend angeordnet.

Der Wählmotor überträgt seine Drehung auf eine am Lagerschlittenteil angeordnete dritte Verzahnung, die vorzugsweise die Form eines Zahnstangenteiles aufweist, insbesondere eine Wälzzahnstange ist.

Im folgenden werden die Erfindungen und deren Ausgestaltungen im Zusammenhang mit den Figuren näher erläutert. Es zeigen:
- Figur 1: eine Darstellung von teilungskonstanten Zahnradpaarungen mit verschiedenen relativen Achslagen zur Erläuterung des Prinzips der vorliegenden Erfindung;
- Figur 2: eine Übersicht über Kronenzahnradflanken zur Erläuterung des Prinzips der Erfindung;
- Figur 3: eine erfindungsgemäße Anordnung zur Übertragung der Schalt- und Wählbewegungen von Getriebemotoren zu einem Schaltfinger; und
- Figur 4: eine Darstellung zur Verdeutlichung des Zusammenwirkens der Anordnung der Figur 3 mit einem Wählmotor und einem Schaltmotor.

Im folgenden werden die Erfindung und deren Ausgestaltungen im Zusammenhang mit den Figuren näher erläutert.

Zu der Erfindung führten die folgenden Überlegungen.

Die Vielfalt der Evolventenverzahnungen kann in zwei große Gruppen eingeteilt werden. Bei den teilungskonstanten Verzahnungen, z.B. bei den üblichen Stirnradverzahnungen, bleibt die Teilung über die Zahnbreite konstant. Bei den teilungsvariablen Verzahnungen, beispielsweise bei Kegelradverzahnungen, verändert sich dagegen die Teilung.

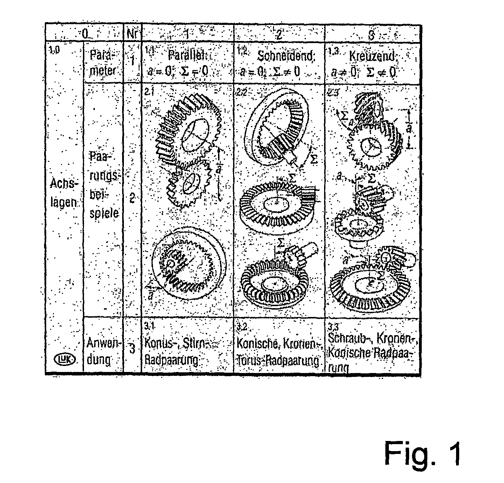

In der gängigen Praxis werden für parallele Achsen Stirnradverzahnungen und für sich schneidende Achsen Kegelradverzahnungen verwendet. Für gekreuzte Achsen werden sowohl teilungskonstante Zahnräder, z.B. Schnecken, Schneckenräder, Schraubenräder, als auch teilungsvariable Zahnräder, z.B. Kegelräder, eingesetzt. Es können jedoch nicht nur für parallele sondern auch für sich schneidende und gekreuzte Achsen teilungskonstante Zahnräder verwendet werden. Sie haben bezüglich der Fertigung und der Achslagentolerierung die Vorteile der Stirnradverzahnungen und können große Drehmomente übertragen. Die verschiedenen Achsen werden durch zwei Größen festgelegt, nämlich durch den Achswinkel Σ und die Achsversetzung a, den kürzesten Abstand zweier sich kreuzender Achsen. Beispiele für teilungskonstante Zahnradpaarungen mit verschiedenen relativen Achslagen sind in der Figur 1 dargestellt.

Ein Kronenzahnrad ist der Spezialfall eines konischen Zahnrades, wenn der Konuswinkel bzw. der Achswinkel Σ bei der Erzeugung gleich 90° ist. Besondere Merkmale von Kronenzahnrädem sind darin zu sehen, dass die Zähne auf der senkrecht zur Radachse liegenden Stimfläche des Radkörpers senkrecht stehen, dass die Zähne entlang der Zahnbreite den gleichen Modul, aber verschiedene Eingriffswinkel besitzen, und dass die Verzahnung den Übergang von der konischen Außenverzahnung zu der konischen Innenverzahnung im vereinheitlichten Verzahnungssystem bildet.

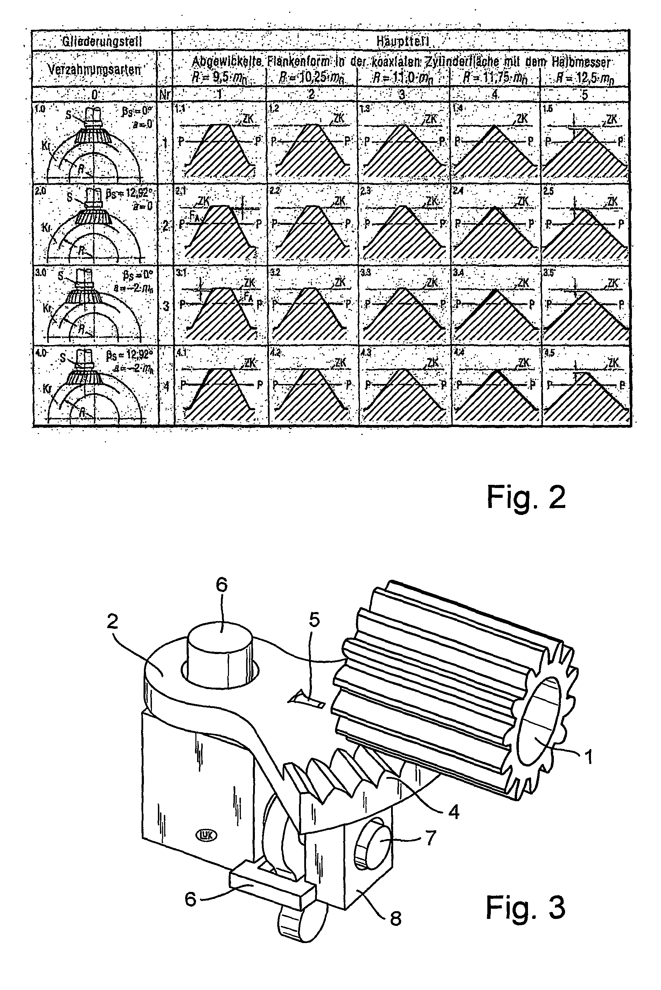

Eine Übersicht der Kronenzahnradflanken ist in der Figur 2 dargestellt.

Bei automatischen Schaltgetrieben kann eine Kronenverzahnung in doppelter Ausführung angewendet werden, um die von den Getriebemotoren zum Schaltfinger übertragenen Schalt- und Wählbewegungen zu entkoppeln. Das entscheidende Bindeglied ist dabei ein Teilsegment des Kronenrades, das direkt vom Ritzel eines Schaltmotors angetrieben wird. Als Antrieb kann ein Hebelteil fungieren, das z.B. als = 1:1-Übersetzung auf der einen Seite, also in Verbindung mit dem Kronenrad, einen oder mehrere gewöhnliche Evolventenzähne, und auf der anderen Seite (im Eingriff mit einem Schaltmaul) die Form des Original-Schaltfingers des Getriebes besitzt.

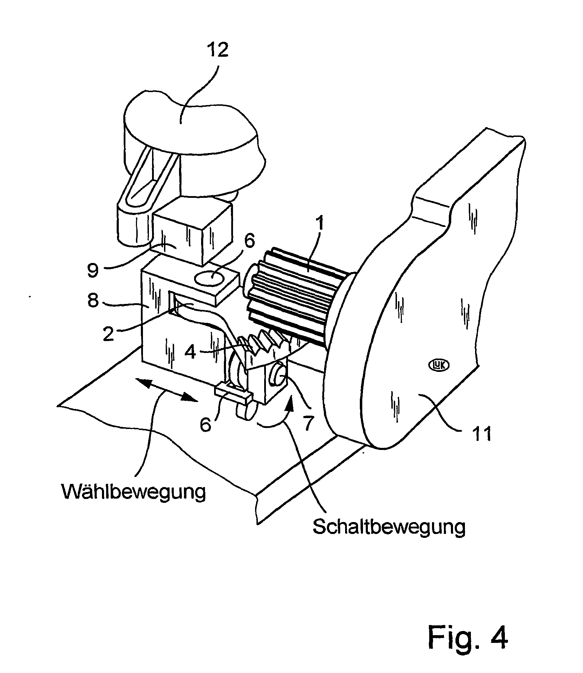

Bei der Schaltbewegung, d.h. hier bei der Drehbewegung um die Kronenradachse 6, überträgt zunächst das Ritzel 1 des Schaltmotors 11 seine Drehbewegung über die erste Kronenverzahnung 4 des Kronenradsegmentteiles 2 auf das Kronenradsegmentteil 2, das auf der Kronenradachse 6 im Lagerschlittenteil 8 gelagert ist. Über die zweite Kronenverzahnung 5 des Kronenradsegmentteiles 2 wird die Bewegung auf den Schaltfinger 6 übertragen, der auf der Schaltfingerachse 7 und damit ebenfalls im Lagerschlittenteil 8 gelagert ist. Die Wählbewegung vollzieht sich entlang der Schaltfingerachse 7. Dabei wird die gesamte Anordnung ohne das Ritzel 1 des Schaltmotors 11 über eine in der Figur 4 dargestellte Kinematik verschoben. Diese wird vorteilhafterweise durch eine weitere, mit dem Lagerschlittenteil 8 verbundene Verzahnung 9 realisiert, die vorzugsweise die Form einer Zahnstange besitzt, die vom Wählmotor 12 angetrieben wird. Insbesondere handelt es sich bei dieser Zahnstange um eine Wälzzahnstange.

Einzelheiten der Figur 4, die bereits im Zusammenhang mit der Figur 3 erläutert wurden, sind in der entsprechenden Weise bezeichnet.

Der Eingriff (Kräfte, Übersetzung) zwischen dem stationären Ritzel 1 des Schaltmotors 11 und dem durch den Wählvorgang verschobenen Kronenradsegmentglied 2 wird durch diese Verschiebung nicht beeinflusst. Somit sind die Schaltbewegung und die Wählbewegung durch das Gleiten zwischen dem Ritzel 1 des Schaltmotors 11 und dem Kronenradsegmentteil 2 vollständig voneinander entkoppelt. Die sekundäre Kronenverzahnung 5 zum Schaltfinger 6 kann bezogen auf die Kronenradachse 6 der primären Kronenverzahnung 4 auch gegenüberliegend positioniert sein. Die Schaltfingerachse 7 liegt dabei parallel zur Achse des Ritzels 1 des Schaltmotors 11.

Neben der vollständigen Entkopplung zwischen der Schaltbewegung und der Wählbewegung weist die erfindungsgemäße Anordnung die folgenden Vorteile auf. Es besteht eine Unabhängigkeit zwischen der axialen Lagerung des Ritzels 1 des Schaltmotors 11 zum Abtrieb (Kronenradsegmentteil 2) desselben. Dies bedeutet, dass ein toleranzunempfindliches Maß zwischen der Anschraubfläche des Schaltmotors 11 und der restlichen Anordnung gegeben ist. Es sind keine speziellen Verzahnungsmaschinen notwendig. Es können vorteilhafterweise die gleichen Maschinen wie für Stirnräder verwendet werden. Vorteilhafterweise ergibt sich bei der vorliegenden Anordnung ein Gewinn an Freiheitsgraden bei der Anordnung der Getriebemotoren. Außerdem ergibt sich ein Raumgewinn innerhalb und außerhalb des Gehäuses der vorliegenden Anordnung. Eine geeignete Kombination der beiden theoretisch voneinander unabhängigen Kronenverzahnungen ermöglicht ein variables Erreichen der gewünschten Gesamtübersetzung.

## Patentansprüche

1. Anordnung zur Übertragung der Schalt- und Wählbewegungen von Getriebemotoren zu einem Schaltfinger , **dadurch gekennzeichnet, dass** ein Segmentteil vorgesehen ist, das um eine Achse drehbar ist, die in einem Lagerschlittenteil gelagert ist, dass das Segmentteil zu seiner Drehung auf seiner einen Seite eine erste, durch das Ritzel eines Schaltmotors angetriebene Verzahnung und auf seiner anderen Seite eine zweite Verzahnung aufweist, die die Drehung des Segmentteiles auf den Schaltfinger überträgt, der im Lagerschlittenteil um eine Schaltfingerachse drehbar ist, und dass das Lagerschlittenteil durch einen Wählmotor in der Richtung der Achse des Ritzels und in der dazu parallelen Richtung der Schaltfingerachse verschiebbar ist.

2. Anordnung nach Anspruch 1, **dadurch gekennzeichnet, dass** die erste Verzahnung und die zweite Verzahnung Kronenverzahnungen sind.

3. Anordnung nach Anspruch 2, **dadurch gekennzeichnet, dass** die erste Kronenradverzahnung und die zweite Kronenverzahnung am Segmentteil sich gegenüberliegend angeordnet sind.

4. Anordnung nach einem der Ansprüche 1 bis 3, **dadurch gekennzeichnet, dass** der Wählmotor seine Drehung auf eine am Lagerschlittenteil angeordnete dritte Verzahnung überträgt.

5. Anordnung nach Anspruch 4, **dadurch gekennzeichnet, dass** die dritte Verzahnung ein Zahnstangenteil ist.

6. Anordnung nach Anspruch 5, **dadurch gekennzeichnet, dass** das Zahnstangenteil eine Wälzzahnstange ist.

## Claims

1. A mechanism for transferring gear changing and selection movements from geared motors to a shift finger, **characterized in that** a segmented element is provided that is rotatable about an axle, is supported in a bearing sliding member, the segmented element has a first gearing on one side, driven by the pinion gear of a shifting motor, that enables it to rotate, and a second gearing on its other side that transfers the rotation of the segmented element to the shift finger, which is rotatable about a shift finger axle in the bearing sliding member, and that the bearing sliding member is displaceable by a selection motor in the direction of the axle of the pinion gear and the direction of the shift finger axle, which is parallel thereto.

2. The mechanism as cited in claim 1, **characterized in that** the first gearing and the second gearing are crown gears.

3. The mechanism as cited in claim 2, **characterized in that** the first crown gear and the second crown gear are arranged opposite one another on the segmented member.

4. The mechanism as cited in any of claims 1 to 3, **characterized in that** the selection motor transfers its rotation to a third gearing arranged on the bearing sliding member.

5. The mechanism as cited in claim 4, **characterized in that** the third gearing is a toothed rack element.

6. The mechanism as cited in claim 5, **characterized in that** the toothed rack element is a rotating toothed rack.

## Revendications

1. Dispositif permettant de transmettre des mouvements de changement de vitesse et de sélection depuis des motoréducteurs à un doigt de commande, **caractérisé en ce qu'**une partie de segment est prévue qui est pivotante autour d'un axe qui est logé dans une partie de chariot de palier, **en ce que** la partie de segment présente pour sa rotation, d'un côté, une première denture entraînée par le pignon d'un motoréducteur et, de l'autre côté, une deuxième denture qui transmet la rotation de la partie de segment au doigt de commande qui est pivotant dans la partie de chariot de palier autour d'un axe de doigt de commande, et **en ce que** la partie de chariot de palier est mobile par l'intermédiaire d'un moteur de sélection dans la direction de l'axe du pignon et dans la direction de l'axe de doigt de commande parallèle à celle-ci.

2. Dispositif selon la revendication 1, **caractérisé en ce que** la première denture et la deuxième denture sont des dentures à couronne.

3. Dispositif selon la revendication 2, **caractérisé en ce que** la première denture à couronne dentée et la deuxième denture à couronne sont disposées faces à faces sur la partie de segment.

4. Dispositif selon l'une quelconque des revendications 1 à 3, **caractérisé en ce que** le moteur de sélection transmet sa rotation à une troisième denture disposée sur la partie de chariot de palier.

5. Dispositif selon la revendication 4, **caractérisé en ce que** la troisième denture est une partie de crémaillère.

6. Dispositif selon la revendication 5, **caractérisé en ce que** la partie de crémaillère est une crémaillère de sélection.
